# EUROPEAN PATENT SPECIFICATION

(11) **EP 4 565 406 B1**
(45) Date of publication and mention of the grant of the patent: **08.07.2026**
(21) Application number: 23761993.7
(22) Date of filing: 03.08.2023
(51) Int. Cl.: B29C 49/04

(54) **ACCUMULATION EXTRUDER HEAD WITH MECHANICAL COUPLING BETWEEN AN OUTPUT OF A MECHATRONIC ASSEMBLY AND A PUSHER ELEMENT**
STAUEXTRUDERKOPF MIT MECHANISCHER KOPPLUNG ZWISCHEN EINEM AUSGANG EINER MECHATRONISCHEN ANORDNUNG UND EINEM SCHIEBERELEMENT
TÊTE D'EXTRUDEUSE À ACCUMULATION À COUPLAGE MÉCANIQUE ENTRE UNE SORTIE D'UN ENSEMBLE MÉCATRONIQUE ET UN ÉLÉMENT POUSSOIR

(30) Priority: 05.08.2022 IT 202200016776
(43) Date of publication of application: 11.06.2025
(73) Proprietor: Magic MP S.p.A., 20841 Carate Brianza (MB) (IT)
(72) Inventor: GIACOBBE, Ferruccio, 20841 Carate Brianza (MB) (IT)
(74) Representative: Raimondi, Margherita
(86) International application number: PCT/IB2023/057858
(87) International publication number: WO 2024/028801

(56) References cited:
- EP-A1- 3 287 255
- FR-A1- 2 327 064
- US-A- 5 645 873
- US-B1- 7 540 735

## Description

The present invention relates to an accumulation extruder head for dispensing a thermoplastic resin parison in a machine for blow-moulding plastic containers and to an associated accumulation extrusion method. Related prior art is described in patent literature EP3287255A1, US5645873A, FR2327064A1 and US7540735B1.

It is known, in the technical sector relating to machines designed to produce blow-moulded plastic articles, that said articles are produced by dispensing a load, called a parison, by means of an extrusion head with an outlet mouth. The parison is in the form of a tube of thermoplastic resin with a given length, diameter and thickness which, once dispensed through the outlet mouth of the extrusion head, remains suspended underneath the extrusion head while waiting for a blowing mould to close around it and "capture" it inside. Once the mould is closed with the parison inside it, the article is formed by blowing compressed air inside the mould. The thickness profile of the parison may be varied by means of a male element (known also as a die), suitably configured and coaxially inserted inside the extrusion head and movable inside it so as to vary the form of the parison outlet mouth during the expulsion of material.

The most common machines for blow-moulding plastic articles use a system for continuous extrusion of the parisons, in which an extrusion head continuously dispenses the thermoplastic material through an outlet mouth so as to feed successive capture and blowing cycles in the mould.

It is also known that the thermoplastic resins are characterized by a certain viscosity, which is variable depending on the type of resin. The viscosity determines the capacity of the melted mass to remain suspended below the extrusion head pending preparation of the mould for capture of the load. Since the weight of the said load tends to lengthen the parison, stretching it and altering its geometric characteristics, when the stretching is excessive for the quality requirements of the finished product, an accumulation (or intermittent) extrusion technique is used so as to reduce significantly the suspension time of the parison. An accumulation extruder head, also known as an intermittent extrusion head, is an apparatus intended for use in machines designed to produce blow-moulded plastic articles with a large size compared to that which can be obtained with the most common continuous extrusion system suitable for smaller size articles. The accumulation head is provided with a vertical-axis accumulation chamber in which a quantity of extruded plastic resin is accumulated, said resin being supplied by a feeding system connected to the chamber and generally comprising an extruder screw which continuously feeds the extruded material to a distribution system which distributes it inside the chamber. Once accumulated, the quantity of resin is subsequently expelled in the form of a tubular parison through a bottom outlet mouth in a single short dispensing step, pushed by a piston movable inside the accumulation chamber between a raised position and a lowered expulsion position.

For the expulsion stroke, conventionally, the piston is operated from a raised position into the lowered expulsion position by means of a high-pressure hydraulic cylinder, the movement of which is controlled by a flow regulating valve.

The system involves the possibility of adjusting the speed and the expulsion stroke in order to determine the quantity of expelled resin and the process parameters.

The most important aspects in the market of machinery for the production of blow-moulded plastic articles are energy savings and production efficiency. These aspects help reduce the production costs and emissions resulting from energy consumption.

In this context it is known that one of the problems of the known apparatus with an accumulation extruder head is that the quantity of energy used for hydraulic operation of the piston represents a very high percentage of the overall energy used for the movements of the machine, generally more than 50% of the total in a machine moved entirely by a hydraulic system.

A further important aspect in the production of blow-moulded plastic articles is the quality of the finished product and repeatability of the production cycle.

It is known in fact that thermoplastic resins are compressible and have a viscoelastic behaviour which may be influenced by parameters such as the speed of the flows, the pressure and the temperature. In the blow-moulding process, an important aspect for maintaining the repeatability of the process is that of keeping the behaviour of the load, i.e. its reactions to mechanical stresses, as constant as possible. In order to reduce such stresses, it is important that a pressure is kept as low as possible in the accumulation chamber, limiting the variations in volume.

For this purpose, the hydraulic accumulation extruder heads are configured to allow the resin to behave as naturally as possible during the accumulation step, eliminating as far as possible elements which may alter the reactions thereof. In particular, the expulsion piston is left free to move back upwards during the accumulation step, pushed by the resin which enters into the accumulation chamber. Furthermore, the bottom surface of the piston has a thrust area sufficient to overcome the friction due to the material flow.

In this sense the hydraulic system is advantageous because it allows the piston to naturally follow the accumulation of the resin inside the accumulation chamber. However, this is in any case uninfluential since the pressure of the plastic inside the accumulation chamber must overcome a series of frictional forces due, for example, to the oil inside the cylinder and/or the weight of the piston, which act on the expulsion piston resulting in an albeit limited pressure inside the accumulation chamber. In order to solve this problem, it is known that a constant pneumatic thrust may be applied on the bottom side of the hydraulic cylinder by means of a valve and a pressure reducer, so as to compensate for these loads. The application of the thrust introduces, however, into the system a further variable element which reduces the precision of the system and therefore the repeatability of the cycle, since it varies the natural expansion of the thermoplastic material.

EP 3,287,255 describes a method for extruding molten resin in an accumulation space of an extrusion head, which comprises a step of separating a top plate from a bottom plate and retracting the top plate upwards by means of a rotational movement of an electric motor and then loading the molten resin into the loading space with a loading pressure sufficient to push the piston upwards against the weight of the bottom plate and the piston inside the loading space, the bottom plate being arranged on the accumulator and coupled to the piston from above, the top plate being engaged with the electric motor and arranged on the bottom plate such as to be able to enter superficially into contact with the bottom plate; and a step of extruding the molten resin from the extrusion mouth by moving the top plate downwards, the top plate and the bottom plate coming into superficial contact with each other by means of a rotational movement of the electric motor and moving therefore the piston downwards into the loading space. In this solution, before performing loading into the accumulation chamber, the top plate is completely retracted upwards to a top end-of-travel stop. This results in the need for long idle travel during the downward stroke, before coming into contact with the top plate, creating a delay during the expulsion step with major consequences in terms of uncertainty in the process management, quality of the end product and other mechanical safety functions. A further problem of the known extrusion head is that, during the head calibration, installation and maintenance steps, when there is no resin inside the accumulation chamber, it is not possible to work on the piston without at least partially disassembling the extrusion head, so that these operations are particularly complex and costly. The technical problem which is posed therefore is that of providing an accumulation extruder head for thermoplastic resin which solves or at least partly overcomes one or more of the said problems of the known heads.

A particular aim of the present invention is to provide an accumulation head which is more efficient from the point of view of energy consumption and repeatability of the production cycle.

A further desirable aspect is that the accumulation head should allow a greater quality of the finished product to be obtained.

A particular object of the present invention is to provide an accumulation head that can be more easily calibrated, installed and maintained.

A further desirable aspect is that the accumulation head should be more versatile with regard to managing the production of products which are different and/or are made using different thermoplastic resins.

These results are obtained with an accumulation extruder head according to Claim 1.

The accumulation extruder head according to the present invention for use in a blow-moulding machine for blow-moulding containers therefore comprises:
a head body having: an internal cavity, inside which there is defined an accumulation chamber with a central vertical axis z designed to be filled with a load of thermoplastic resin; and a bottom outlet mouth for expulsion of the load of thermoplastic resin in the form of a tubular parison, the accumulation chamber communicating at the bottom with the outlet mouth;
a piston, coaxially inserted inside the accumulation chamber, the piston being movable in a reciprocating manner inside the accumulation chamber along the central vertical axis z in an expulsion direction, from a raised position into a lowered expulsion position, and in an upward direction, from the expulsion position into the raised position;
a mechatronic assembly 30 comprising: an output element, linearly displaceable along the central vertical axis z between a raised position and a lowered position; and a plurality of electric actuators, each able to rotationally operate a respective rotating element;
a pusher assembly arranged between the output element and the piston and comprising an input element rigidly coupled to the piston for displacement therewith and arranged to cooperate with the output element of the mechatronic assembly so as to push the piston in the expulsion direction towards the lowered position.

Each rotating element is coupled to the output element so that rotation of the rotating element displaceably drives the output element in the vertical direction and the electric actuators are controlled and configured to drive in a coordinated manner said rotating elements so as to jointly displace said output element.

According to preferred aspects of the invention, the mechatronic assembly and the input element of the pusher assembly are operationally coupled so as to keep the output element of the mechatronic assembly detached from the input element of the pusher assembly during the movement of the piston in the upward direction in a filling step for filling the accumulation chamber. The mechatronic assembly may in particular be configured so that, during movement of the piston in the upward direction in the filling step for filling the accumulation chamber, the output element is displaced in the upward direction so as to maintain a predefined minimum distance between the output element and the input element of the pusher assembly.

A control unit for controlling the mechatronic assembly may be configured to control operation of said electric actuators in a synchronized manner so as to displace said output element.

Preferably, a detection sensor is provided for detecting a distance between the output element of the mechatronic assembly and the input element of the pusher assembly. The control unit for controlling the mechatronic assembly may therefore adjust the displacement of the output element during the upward movement in the filling step depending on a detected distance signal emitted by the detection sensor, so as to maintain a predefined minimum distance between the output element and the input element of the pusher assembly.

The coupling between the output element of the mechatronic assembly and each rotating element is preferably a male/female coupling.

According to the invention, the input element of the pusher assembly is mechanically coupled together with the output element via coupling means configured to keep the input element engaged with the output element, leaving a degree of play for relative movement in the vertical direction greater than or equal to a predefined minimum distance.

The present invention relates furthermore to a method for extrusion with accumulation according to Claim 18.

Preferred embodiments are described in the dependent claims which are fully cited herein.

Further details may be obtained from the following description of a non-limiting examples of embodiment of the subject of the present invention provided with reference to the attached drawings in which:
Figure 1: is a partially exploded schematic view of an example of embodiment of an accumulation extruder head according to the invention;
Figure 2: is a top plan view of the accumulation head according to Fig. 1 in the assembled condition;
Figure 3: is a vertically sectioned view, along a plane passing along the line III-III of Fig. 2, of the accumulation head of Figure 2 in the assembled condition;
Figure 4: is a view, sectioned along a transverse plane passing along the line IV-IV of Figure 3, of the assembled accumulation head of Fig. 3;
Figure 5: is a partial schematic view, vertically sectioned along a plane passing along the line V-V of Figure 4, of the expulsion part of the accumulation head of Fig. 3, in a condition where the chamber is full and the piston raised;
Figure 6: is a partial schematic view, vertically sectioned along a plane passing along the line V-V of Figure 4, of the expulsion part of the accumulation head of Fig. 3, in a condition where the chamber is empty and the piston lowered into the expulsion position;
Figure 7: is a partially exploded, schematic view of the connection between the mechatronic assembly and the pusher assembly, via resilient means arranged in between, in an example of a variation of embodiment of the accumulation extruder head according to the invention; and
Figure 8: is a partial view, vertically sectioned, of the head according to Fig. 7 in the assembled condition.

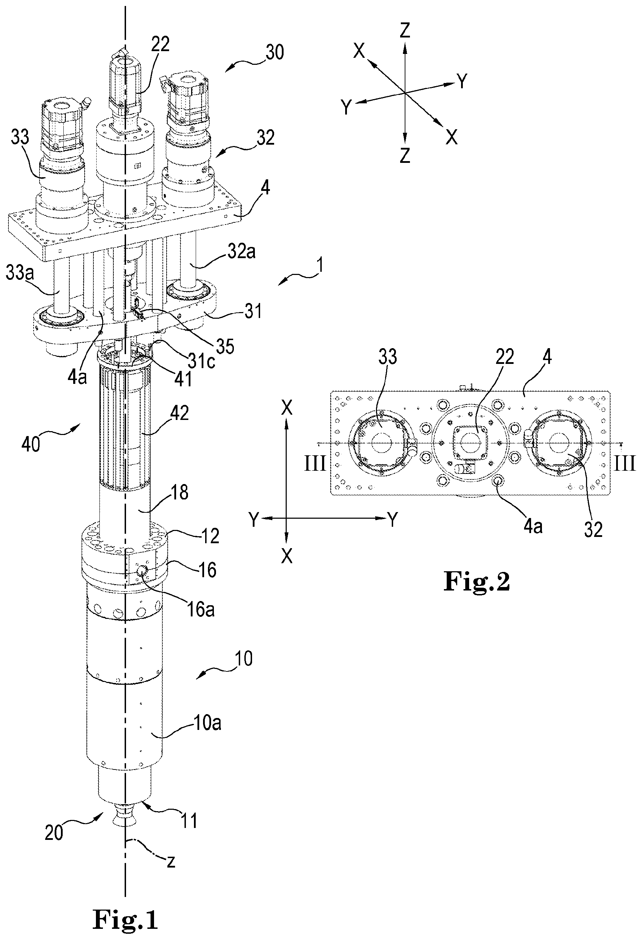

With reference to Figures 1-3 assuming solely for the sake of easier description and without a limiting meaning a set of three reference axes arranged, respectively, in a vertical direction Z-Z, parallel to a central vertical axis z of the accumulation extruder head and a direction of expulsion of a parison, transverse direction Y-Y perpendicular to the vertical direction and corresponding to the width of the head, and longitudinal direction X-X, corresponding to the depth of the head, a preferred example of embodiment of an accumulation extruder head 1 according to the present invention comprises a substantially cylindrical housing head body 10, extending in the vertical direction Z-Z between a bottom mouth 11 and a top end 12.

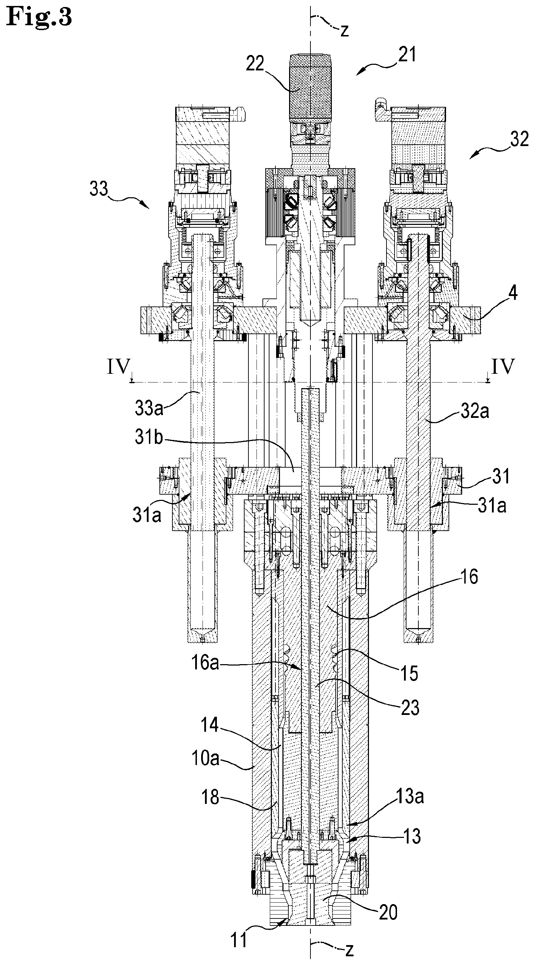

The head body 10 has a substantially cylindrical internal cavity 13 (Fig. 3) inside which there is defined an accumulation chamber 13a with a central vertical axis z suitable for being filled with a load of thermoplastic resin. The communication chamber 13a communicates at the bottom with the bottom outlet mouth 11 for expulsion of the thermoplastic resin load in the form of a tubular parison designed to be blow-moulded in a blow-moulding unit (not shown) in order to obtain a plastic container.

The bottom end with the outlet mouth 11 of the head body 10 is conventional per se and not described in further detail.

In the preferred example shown, the head body 10 has in particular a cylindrical housing with a side wall 10a which defines the substantially cylindrical internal cavity 13 with a central vertical axis z.

The head body 10 furthermore comprises a mushroom-shaped head 16 coaxially inserted inside the cavity 13 and fixed to the top end of the side wall 10a of the cylindrical housing.

The mushroom head 16 has a central coaxial hole 16a and an inlet 16b with a longitudinal axis for supplying the extruded resin, connected using conventional technology to distribution ducts 15 and supply ducts 14, formed inside the mushroom head and designed to connect the inlet 16b for the resin to the accumulation chamber 13a defined inside the cavity 13 of the head body 10, so that the extruded thermoplastic resin fed to the inlet 16b is distributed by the distribution ducts 15 and dispensed inside the accumulation chamber 13a by means of the supply ducts, so as to be accumulated therein and then expelled in the form of a parison through the outlet mouth 11.

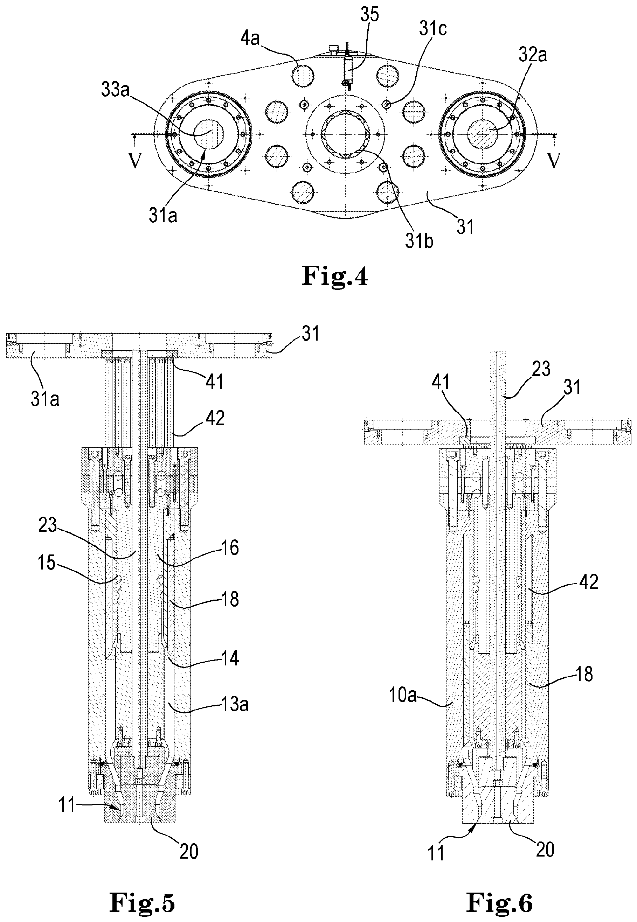

The accumulation chamber 13a (Fig. 5) is in particular defined inside the volume of the cavity 13 between the side wall 10a of the cylindrical housing and the central vertical axis z, in a cylindrical volume radially comprised between the mushroom head 16 and the side wall 10a.

During use, the head body 10 will be fixed to a fixed frame of the container forming machine and, according to conventional technology, the inlet mouth 16b for the extruded resin will be connected to an extrusion unit for example comprising an extruder screw with a longitudinal-axis outlet duct connected to the inlet mouth 16b.

A top plate 4 is fixed to the head body 10 by means of uprights 4a, at a distance in the vertical direction Z-Z from the top end 12 of the head body 10.

According to conventional technology, the male element 20 is coaxially inserted inside the cavity 13 of the head body 10. The male element 20 is movable coaxially with respect to the housing body 10 so as to vary the opening of the bottom outlet mouth 11 for the resin so as to adjust a thickness profile of the parison which is expelled.

The male element 20 is moved by an actuating unit 21 with an electric actuator 22 mounted on the top plate 4 and a transmission chain 23, which are arranged coaxially with respect to the central vertical axis z. The transmission chain comprises in particular a rod 23 coaxially inserted inside the central hole 16a of the mushroom head, which connects an output of the electric actuator 22 to the male element 20 (Fig. 3).

A piston 18 is coaxially inserted inside the accumulation chamber 13a; in particular the piston 19 is housed inside a cylindrical space between the mushroom head 16 and the side wall 10a.

The piston 18 is movable in a reciprocating manner inside the accumulation chamber along the central vertical axis z:
- in an expulsion direction, from a raised position into a lowered expulsion position; and
- in an upward direction, from the expulsion position into a raised position.

According to an advantageous aspect of the invention, the accumulation extruder head 1 comprises a mechatronic assembly 30, mounted on the plate 4 fixed on top of the head body 10.

The mechatronic assembly 30 comprises an output element 31, linearly displaceable along the central vertical axis z with respect to the fixed head body 10 between a raised position and a lowered position.

The mechatronic assembly 30 further comprises a plurality of electric actuators 32,33, each able to rotationally drive a respective rotating element 32a,33a; each rotating element rotates about a respective vertical axis which is parallel and offset with respect to the central vertical axis z and is coupled to the output element 31 by means of a coupling, for example a male/female coupling, such that rotation of the rotating element 32a,33a displaces the output element in the vertical direction. The electric actuators 32,33 are controlled and configured to operate in a coordinated manner said rotating elements 32a,33a so as to displace jointly said output element 31.

In greater detail, the mechatronic assembly 30 of the preferred example shown comprises two electric linear actuators 32,33, each preferably comprising a vertical-axis electric gearmotor with servomotor, encoder and reduction gearing. Each actuator 32,33 rotationally operates a respective vertical-axis screw 32a,33a which is offset with respect the vertical central axis z of the accumulation chamber and the outlet mouth. Therefore, the actuators 32,33 and the screws 32a, 33a are located laterally with respect to the axis z of the head body, preferably in diametrically opposite positions in the transverse direction Y-Y, allowing both balanced operation of the output element 31 and coaxial housing of the actuating unit 21 for operation of the male member 20, which, in order to operate correctly, must be coaxial with the accumulation chamber 13a and the output mouth 11.

With further reference to Figs. 4-6, the output element of the preferred mechatronic assembly shown consists of a plate 31 extending in a longitudinal transverse plane, with a thickness in the vertical direction, and designed to move along the central vertical axis z in the expulsion direction, from a raised position into a lowered position, and in the upward direction, from a lowered position (Fig. 3, 6) into a raised position (Fig. 5).

The plate 31 has a central hole 31b designed to allow insertion of the actuation unit 23 for actuating the male element 20 for adjusting the outlet mouth 11.

The plate 31 is coupled via a male/female coupling to each of the rotating screws 32a,33a of the linear actuators, so that rotation of the screws displaces the plate 31 along the central axis z. In particular, the plate has a pair of vertical-axis holes 31a with female thread arranged on opposite sides in the transverse direction Y-Y with respect to the central hole 31 b. A respective screw 32a,33a of a respective electric actuator 32,33 is housed inside each of the holes 31a.

Preferably, the screws 32a,33a are irreversible and/or form with a respective gearmotor an irreversible mechanical transmission.

An electronic unit for controlling the movement of the mechatronic assembly 30 is able to control electronically the electric actuators and therefore the movement of the output element 31 in the vertical direction Z-Z.

In greater detail, the electric gear motors are synchronized electronically so as to rotationally drive in a coordinated manner the respective screws 32a,33a and therefore displace the output plate 31 in a balanced manner. For example, the gearmotors 32,33 may be electronically controlled in a master-slave configuration. A master actuator 32 is actuated according to the desired movement configuration and one or more slave actuators 33 follow(s) the movement of the master actuator. The electronic control system is therefore able to ensure simultaneous movement with a high degree of precision, for example to within one minute of an angular degree of the said motor which, in relation to the reduction ratio of the reduction system, is able to maintain alignment of the plate to within one hundredth of a millimetre.

Therefore, the screws 32a,33a rotate inside the female threads 31a simultaneously causing the downward or upward movement of the plate 31 in accordance with the pushing and filling cycles of the production cycle.

The synchronization system, alternatively, may for example be formed by means of any mechanical transmission (of the belt, chain, gear or other type).

The mechatronic assembly 30 may comprise more than two electric actuators, preferably arranged angularly equidistant along a ring around the vertical central axis z of the head 1 so as to maintain the mechanical equilibrium of the thrusts acting on the output element. This allows the thrust potential to be increased and/or the cost and overall dimensions of the mechatronic assembly to be optimized. In the case where there are more than two electric actuators, the output plate 31 will have a corresponding number of holes arranged angularly equidistant along a circumference.

A pusher assembly 40 for pushing the piston 18 is arranged between the output plate 31 and the piston 18 and is rigidly coupled to the piston 18 for displacement therewith so as to push the piston 18 in the expulsion direction towards the lowered position.

The pusher assembly 40 comprises preferably a top ring 41 which forms a movement input element designed to cooperate with the output plate 31 of the mechatronic assembly 30. The ring 41 is rigidly connected to the piston 18 for displacement therewith, in the preferred example by means of a plurality of vertical columns 42 arranged in a cylindrical volume defined in the top part of the head body 10.

According to an advantageous aspect of the invention, the output element 31 of the mechatronic assembly 30 and the input element 41 of the pusher assembly 40 are operationally coupled (Figs. 5,6) so as to move integrally in the vertical direction Z-Z and push the piston 18 inside the plastic accumulation chamber 13a in the expulsion direction during a pushing step for expulsion of the parison. According to further advantageous aspect of the invention, the mechatronic assembly 30 and the input element 41 of the pusher assembly 40 are operationally coupled so as to keep the output element 31 of the mechatronic assembly 30 detached from the input element 41 of the pusher assembly during upward movement of the piston in a filling step for filling the accumulation chamber.

In the preferred example shown, the output plate 31 has, on its bottom side, an inset annular seat coaxial with the central vertical axis z and designed to house the input ring 41 of the pusher assembly.

Preferably, the input element 41 of the pusher assembly 40 is mechanically coupled to the output element 31 by means of connection means, in particular a series of fastener elements, such as collar screws 31c (Fig. 4), which keep the ring 41 engaged with the plate 31 leaving play for relative movement in the vertical direction greater than or equal to a predefined minimum distance, sufficient for detaching the plate 31 from the ring 41. This connection between plate 31 and ring 41 is particularly advantageous also during the head calibration, installation and maintenance steps, allowing the piston 18 to be raised by means of the plate 13 when the apparatus is not in operation.

Preferably, the mechatronic assembly is configured so that, during the movement of the piston 19 in the upward direction during the accumulation step, the output plate 31 is operated in the upward direction so as to keep the distance between the plate 13 and the top ring 41 of the pusher assembly 40 greater than or equal to a predefined minimum distance. It is preferable that the predefined minimum distance is the minimum distance compatible with the movement dynamics of the mechatronic assembly and the piston, in particular by the amount which the mechatronic assembly is faithfully able to follow the movement of the ring 41. By reducing as far possible the predefined minimum distance it is possible to minimize the transition between the (upward) loading step and the (downward) expulsion step where there is an idle stroke of the plate 31, i.e. where the piston does not actually expel plastic. It is within the competence of the person skilled in the art to determine, based on the characteristics of the apparatus, a suitable minimum predefined distance, which may be for example between 0.1 and 2 mm. In the preferred embodiment shown, a sensor of a transducer 35, which touches the ring 41, is embedded inside the output plate 31; this solution forms a preferred example of a sensor for detecting the distance between the output element 31 and the input ring 41 of the pusher assembly, which allows the control unit of the mechatronic assembly to adjust the displacement of the output element 31 during the upward movement in the accumulation step, depending on a minimum distance from the input element 41 of the pusher assembly.

The transducer 35 arranged between the plate 31 and the ring 41 allows reading of the distance between the two elements. The distance is at "0" during the expulsion step, while during the accumulation step the predefined minimum distance is maintained, this ensuring that the plate 31 and the ring 41 are kept separated.

With reference to Figures 5 and 6, according to a preferred example of a method for accumulation extrusion of a parison of thermoplastic resin which uses the head 1 of the present invention, a resin load is accumulated inside the chamber 13a, said resin being fed by an extrusion screw connected to the inlet 16b of the head body 10, distributed by the distribution ducts 15 and fed to the accumulation chamber 13a by means of the supply ducts 14. The accumulation of resin inside the chamber 13a pushes the piston 18 upwards towards the raised position (Fig. 5), during this step the plate 31 is kept at a predefined minimum distance from the input ring, by means of the electric actuators 32,33 which operate the screws and therefore the plate 31 in the upward direction.

At the end of the accumulation step, the chamber is filled with the predefined load of plastic resin and the expulsion step starts so that the control unit operates the electric actuators 32, 33 and the screws 32a,33a in the opposite direction of rotation, so as to cause the downward movement of the plate 31 and therefore the downward movement of the piston pushed by the pusher assembly and the expulsion of the plastic resin accumulated inside the accumulation chamber 13a via the outlet mouth 11.

In greater detail, during the expulsion step, the screws 32a,33a operated by the respective electric actuators 32,33 move the plate 31 downwards in the vertical direction Z-Z. The plate comes immediately into contact (Fig. 5) with and presses against the ring 41 of the pusher assembly, so that the downward stroke of the plate 31 pushes the input ring 41, the transmission columns 42 and the piston 18 to be displaced integrally along the vertical axis z into the lowered position (Fig. 6) which corresponds to complete expulsion of the parison by the piston 18. During expulsion, the die or male element 20 is operated so as to vary the opening of the outlet mouth 11 in accordance with a programmed thickness profile defined for the parison being expelled.

Advantageously, owing to the mechatronic assembly 30, the downward stroke movement of plate 31 and piston 18 may be controlled both in terms of speed and in terms of length of the stroke. In a preferred configuration, the electronic control unit for controlling the movement of the mechatronic assembly may in particular perform a feedback control of the actuators 32,33, for example by means of the encoder with which they are provided. The movement may therefore be easily programmed by the operator who may, for example, set precisely various speeds at the various points of the downward stroke during the expulsion step, with reference, for example, to a predefined graph of the speed during the downward stroke.

Once expulsion of the parison has been completed, the plate 31 is immediately displaced towards the raised position by the electric actuators 32,22 which reverse the direction of rotation of the screws 32a,33a, causing the separation of the plate 31 from the ring 41; this allow the piston to move back upwards freely towards the raised position, pushed by a fresh load of thermoplastic resin fed to the accumulation chamber 13a.

In greater detail, the control unit for controlling the mechatronic assembly immediately positions the plate 31 at the predefined minimum distance, reading the distance signal emitted by the transducer, and intervenes so as to maintain this minimum distance for the entire upward stroke of the piston 18.

Advantageously, in a preferred configuration, for the upward stroke of the output plate 31 during the accumulation step, the electronic unit for controlling the movement of the mechatronic assembly 30 may perform feedback control of the electric actuators 32,33, using a feedback control configuration different from that of the expulsion step, where reference is made to a distance between the output element 31 and the input element 41 for the movement of the pusher assembly. The control unit compares a value detected by the distance detection sensor 35 with a predefined minimum value, for example set by the operator. The control unit then operates the electric actuators 32,33 and therefore the output plate 31 so as to keep the distance detected as close as possible to the set minimum value.

In this way, the plate 31 moved by the actuators follows the natural upward movement of the piston 18, assisting it and not affecting in any way the natural reactions of the piston to accumulation of the thermoplastic resin inside the chamber 13a, since there is never physical contact between the plate 31 and ring 41. Advantageously, therefore, no setting parameter for the accumulation step is required, since the system automatically adapts to the feeding of the resin into the accumulation chamber 13a (depending on the throughput of the extrusion screw) and to the elastic return movement resulting from relaxation of the material at the end of the expulsion step.

By keeping the output plate 31 at a minimum distance there is the further advantage that it may be easily brought into contact with the ring 41 and, therefore rigidly connected to the piston 18 for the following expulsion step, at any stage of the cycle or load level. With this option it is possible to keep substantially unvaried the other systems for correction of the machine cycle, such as, for example, adjustment of the speed of the extrusion screw and management of the other parameters normally performed by means of hydraulic expulsion.

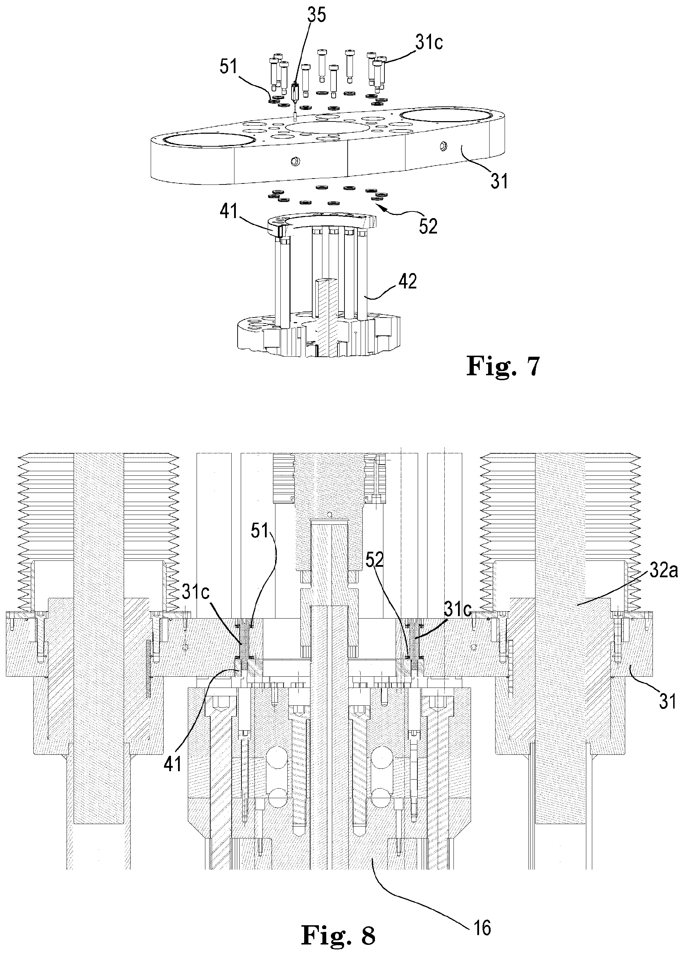

Preferred embodiments of the accumulation head according to the present invention (Figs. 7-8) further include resilient means 51,52 arranged and configured to react elastically to a variation in the distance between the output element 31 of the mechatronic assembly and the input element 41 of the pusher assembly.

In particular, the resilient means 51,52 may be arranged so as to exert on the input element 41 an elastic pushing force towards the output element 31, concordant with the upward movement of the piston and therefore the input element 41 and/or an elastic pushing force away from the output element 31, opposing the upward movement of the piston and therefore the input element 41. In greater detail and with reference to Figures 6 and 7, a preferred variation of embodiment of the accumulation head according to the present invention differs from the embodiment of Figs. 1-5 in that a plurality of screws 31c which connect the input ring 41 of the pusher assembly to the output plate 31 support on their vertical shank one or more sets of resilient means 51,52.

In particular, as seen above, the collar screws 31c are inserted into through-holes passing through the plate 31 and fixed in the ring 41, allowing a relative movement in the vertical direction. A first set of springs 51, preferably Belleville washers, are arranged on the shanks of said screws so as to act elastically between the plate 31 and the head of the respective screw 31c. Another set of springs 52, preferably Belleville washers, are arranged on the shanks of screws 31c so as to act elastically between the plate 31 and the input ring 41.

The length of the screws 31c, the rigidity of the resilient means 51,52 and the thickness of the plate 31 are preferably configured so that the springs of the resilient means 51,52, once the head has been assembled, are slightly compressed so as to be prestressed in a predefined equilibrium position. A prestressing force may be for example chosen depending on the force of initial separation of the piston from the accumulation chamber for the upward movement. In particular, the prestressing force is greater than or equal to the initial separation force, in other words, such as to cancel out, in static conditions with the accumulation chamber empty, the mechanical friction and/or other resistant forces which oppose the upward movement of the piston pushed by the resin load. This friction could in fact cause a kind of vibration affecting the movement (start and stop) of the ring 41 so that there would be an oscillation of the distance between ring 41 and plate 31 which would have an effect on the distance read by the transducer 35, resulting in vibration of the gearmotors.

The configurations of the invention with a distance variable by a limited amount between the output element 31 and the input element 41 and the interposition of one or more sets of resilient means 51,52 allow better calibration and modulation of the upward movement of the output element 31, operated by the electric actuators, following a predefined distance from the ring 41, and therefore the upward movement of the piston resulting naturally from the entry of plastic material into the accumulation chamber.

Basically, in the static equilibrium position, the distance between the plate 31 and the ring 41 is stable at a predefined distance where the pushing force of the prestressed resilient means 51,52 is in equilibrium.

The distance between the plate 31 and the ring 41 when the system of springs 51,52 is in equilibrium may preferably be greater than or equal to 1 mm and less than or equal to 2 mm.

Advantageously, a variation in the distance with respect to the equilibrium position results in slackening of one of the two sets of springs 51,52 and compression of the opposite set. If, for example, the plate 31 and ring 41 are spaced (plate 31 rises by a greater amount/more quickly than the ring 41), the springs 51,52 react causing upward pushing of the ring 31, and therefore the piston, which is proportional to their deformation. On the other hand, if the plate 31 and ring 41 move together, there will be an opposite thrust of the springs, counteracting the upward movement of the piston.

The reaction of the springs 51, 52 may therefore generate a pushing force, assisting or opposing the upward movement of the piston and tending to bring the assembly into the equilibrium position, facilitating the maintenance of a predefined minimum distance between plate 31 and ring 41 and avoiding sudden variations in the pressure inside the accumulation chamber, which would damage the resin or cause leakages from the die. A pushing force acting in accordance with the upward movement of the piston has an accumulation decompression function which is able to avoid peaks in the forces resisting the upward movement of the piston, due for example to a momentary pushing pressure insufficient to overcome the mechanical friction. In this way in particular leakages of material from the bottom die are avoided.

A downward pushing force, opposing the upward movement of the ring 41, has a counter-pressure function, i.e. increasing the pressure inside the accumulation chamber so as to avoid, during the filling step, especially in the case of very viscous plastics, said pressure being insufficient to prevent the recall of air through the die, which air would be incorporated in the load.

In preferred embodiments, the head may also be configured so that, by means of the control unit, the predefined distance to be maintained between the output element 31 and the input element 41 during the upward step is set to be equal to said distance in the equilibrium position.

Advantageously, upon variation of the process conditions or in in cases where it is considered appropriate, the control unit may be configured to allow the setting of a different predefined (minimum) distance to be maintained during the upward movement of the piston (for example it is possible to attribute a deviation of the value read by transducer 35 from an electronic zero corresponding to the equilibrium position).

In all cases, the control unit will therefore operate the actuators so that the predefined set distance is maintained during the whole of filling of the accumulation chamber. A deviation between the predefined distance to be maintained and the distance in the equilibrium position will cause a greater or lesser compression of one or the other set of springs 51,52, with a resultant greater or lesser elastic reaction during the upward movement. The resultant pushing force obtained will be all the greater the greater the deviation which is programmed.

During the expulsion step, the pushing of the plate causes complete compression of the resilient means 51,52 which instead have no effect, since the plate 31 is in contact with the ring 41 for the whole of the expulsion step.

The accumulation extruder head with mechatronic assembly according to the present invention is able to reduce considerably the energy consumption, while ensuring a greater precision of the movements during control of both the speed and positioning curves. In addition, there is a significant improvement in the repeatability of the upward and downward movements of the piston, so that the successive expulsion and recharging cycles are very similar to each other.

The mechatronic actuating assembly is a "power on demand" system which uses only the amount of energy needed. The gearmotors react instantaneously so as to adapt the movement vector to the programmed cycle, with direct modulation of the torque and therefore the power.

The blow-moulding process is such that relatively important parameters are subject to variations, so that by managing to reduce the greatest possible number of variables and the amount of said variations it is possible to reduce the tolerances of the parameters and increase the efficiency of the process. The head according to the present invention is therefore able to reduce the amount of plastic used in the articles produced, reduce the cycle time of the blow-moulding machine, improve the productivity and reduce also the production waste, which is notoriously relatively high in the blow-moulding process, increasing the efficiency of the machine from 93/95% (efficiency of a process regarded as being stable with a hydraulic machine) to values in the region of 96/98%. Furthermore, the production efficiency remains more or less constant at any load and speed.

For example, a head according to the present invention which uses a pair of gearmotors able to develop a combined power of 28 Kw in the most demanding conditions is able to produce a maximum pressure in the accumulation chamber of 200 bar and a movement speed of 90 mm per second, with a minimum energy saving of 57% compared to a comparable oil-hydraulic system.

Furthermore, the accumulation head according to the present invention is able to keep more or less constant the viscoelastic behaviour of the thermoplastic resin load during the accumulation step, leaving the piston free to move upwards without other mechanical members being able to influence the movement thereof. The mechanical stress acting on the load being accumulated are therefore reduced to a minimum, as are the variations in volume. The resin thus behaves in a natural manner.

The preferred control unit of the mechatronic assembly and the separation between the output element and input element of the pusher assembly during accumulation are able to overcome the intrinsic drawbacks of mechatronic systems which, using mechanical reduction gears which are irreversible or difficult to reverse, would require a major effort on the user side in order to reverse the movement of the system and allow the natural upward movement of the piston.

By controlling reversal of the mechatronic assembly during the accumulation step, based on a distance between the output element of the mechatronic assembly and input element of the pusher assembly, it is possible to solve in a simple manner a major problem. Basing control on the detection of the internal pressure of the accumulation chamber could in fact result in major or more serious reading errors of the hydraulic system, since the sensors must operate within a very low section of the normal working range and therefore with possibility of reading errors which have a major impact. The management of the loading step could become even more complex if said control were performed with reference to other parameters such as the speed of the extrusion speed; the throughput of the screw is in fact not proportional to the speed of rotation and is greatly influenced by the quality of the plasticized resin (percentage of recovered reground colouring agents, etc.).

With the accumulation head according to the present invention advantageously it is possible to prevent the piston from moving up more rapidly than the throughput of the load being fed by the extrusion screw, thus preventing the accumulation in the accumulation chamber of air bubbles which would alter the volume of the load, resulting moreover in the risk of auto-combustion of the plastic owing to the presence of oxygen. Furthermore, the piston does not move up too slowly, thereby avoiding inside the accumulation chamber the generation of an excessive pressure which alters the actual volume of the load and causes the leakage of plastic from the die, with negative consequences for the process.

The mechatronic assembly according to the present invention is moreover able to assist the expansion of the resin which occurs during reversal from the expulsion step to the loading step, thus avoiding further disturbance of the process. Said expansion, due to a drastic drop in the pressure inside the chamber owing to cessation of the pushing force, occurs during an initial upward movement, in which residual material expands rapidly and then restabilizes its volume when the normal loading pressure is reached.

Owing to the introduction of resilient means, arranged between the mechatronic assembly and the pusher assembly in order to react elastically to a variation in the distance between the output element of the mechatronic assembly and the input element of the pusher assembly so as to move the input element, it is possible to modulate and calibrate even better the upward movement of the piston during filling of the accumulation chamber.

Furthermore, the fact that the head according to the present invention does not require the use of pressurised oil eliminates the risk of breakage of the components of the pressure plant and therefore the associated safety systems which are greatly simplified with the mechatronic system. The machines for machining the thermoplastic materials have resistances which heat the components of the extrusion system to as high as 300°C. The accidental leakage of pressurised oil from a hydraulic system atomizes the oil to the point that contact thereof with the very hot resistances may result in the risk of fire. Furthermore, the hydraulic system comprises a storage tank where the oil is drawn by the pump and sent to the circuit. Then the oil returns into the tank where it is cooled and filtered. The tank must have dimensions so as to keep the variation in the oil level within certain limits and, owing to the return oil flows, which are sometimes very voluminous, it must have air vent valves which are provided with filters, **but do** not manage in any case to retain all the atomized oil, so that part thereof may be dispersed in the air. Where articles for the medical or food sector are produced, it must be ensured that the air inside the production plant has a level of contamination which is kept within certain limits, something which mechatronic systems are able to be ensure much more effectively.

## Claims

1. Accumulation extruder head (1) for a blow-moulding machine for blow-moulding containers, comprising:
a head body (10), having:
an internal accumulation chamber (13a) with a central vertical axis (z), designed to be filled with a load of thermoplastic resin;
a bottom outlet mouth (11) for expulsion of the load of thermoplastic resin in the form of a tubular parison, the accumulation chamber (13a) communicating at the bottom with the outlet mouth (11);
a piston (18), coaxially inserted inside the accumulation chamber (13a), the piston (18) being movable in a reciprocating manner inside the accumulation chamber along the central vertical axis (z):
- in an expulsion direction, from a raised position to a lowered expulsion position; and
- in an upward direction, from the expulsion position to a raised position;
a mechatronic assembly (30) comprising:
an output element (31), linearly displaceable along the central vertical axis (z) between a raised position and a lowered position;
a plurality of electric actuators, each arranged to rotationally operate a respective rotating element;
a pusher assembly (40) arranged between the output element (31) and the piston (18) and comprising an input element (41) rigidly coupled to the piston (18) for displacement therewith and arranged to cooperate with the output element (31) of the mechatronic assembly (30) so as to push the piston (18) in the expulsion direction towards the lowered position;
wherein each rotating element is coupled to the output element (31) so that rotation of the rotating element displaceably drives the output element in the vertical direction; and
wherein the electric actuators are controlled and configured to drive in a coordinated manner said rotating elements so as to jointly displace said output element (31),
**characterized in that** the input element (41) of the pusher assembly (40) is mechanically coupled with the output element (31) via coupling means (31c) configured to keep the input element (41) engaged with the output element (31), leaving a degree of play for relative movement in the vertical direction greater than or equal to a predefined minimum distance.

2. Accumulation extruder head according to Claim 1, wherein the output element (31) of the mechatronic assembly (30) and the input element (41) of the pusher assembly (40) are operationally coupled so as to be displaced integrally in the vertical direction (Z-Z) in the expulsion sense to push the piston (18) inside the thermoplastic resin accumulation chamber (13a) during expulsion of the load in the form of a parison.

3. Accumulation extruder head according to one of the preceding claims, wherein the mechatronic assembly (30) and the input element (41) of the pusher assembly (40) are operationally coupled so as to keep the output element (31) of the mechatronic assembly (30) detached from the input element (41) of the pusher assembly during movement of the piston in the upward direction in a filling step for filling the accumulation chamber.

4. Accumulation extruder head according to the preceding claim, wherein the mechatronic assembly is configured such that, during the movement of the piston in the upward direction in the filling step for filling the accumulation chamber, the output element (31) is displaced in the upward direction so as to maintain a predefined minimum distance between the output element and the input element (41) of the pusher assembly (40).

5. Accumulation extruder head according to one of the preceding claims, comprising a control unit for controlling the mechatronic assembly configured to control operation of said electric actuators in a synchronized manner to displace said output element (31).

6. Accumulation extruder head according to one of the preceding claims it comprises a detection sensor for detecting a distance between the output element (31) of the mechatronic assembly and the input element (41) of the pusher assembly; the head being configured such that displacement of the output element (31) during the upward movement in the filling step is controlled depending on a detected distance signal emitted by the detection sensor (35).

7. Accumulation extruder head according to Claim 5 and 6, wherein the control unit of the mechatronic assembly adjusts the displacement of the output element (31) during the upward movement in the filling step, depending on a detected distance signal emitted by the detection sensor (35) so as to maintain a predefined minimum distance between the output element (31) and the input element (41) of the pusher assembly.

8. Accumulation extruder head according to one of the preceding claims, wherein each rotating element rotates about a vertical axis parallel and offset with respect to the central vertical axis (z).

9. Accumulation extruder head according to one of the preceding claims, comprising two electric actuators and respective rotating elements arranged in diametrically opposite positions with respect to the vertical central axis (z) or more than two electric actuators and respective rotating elements arranged angularly equidistant along a circumference centred on the vertical central axis (z).

10. Accumulation extruder head according to one of the preceding claims, wherein a male element (20) is coaxially inserted in the cavity (13) of the head body (10) and is movable coaxially with respect to the head body (10) so as to vary the opening of the bottom outlet mouth (11) for expelling the resin in order to adjust a thickness profile of the expelled parison, wherein the male element (20) is moved by an actuating unit (21) with an electric actuator (22) and a transmission chain (23), which are arranged coaxially with the central vertical axis (z).

11. Accumulation extruder head according to one of the preceding claims, wherein the output element of the mechatronic assembly is formed by a plate (31) coupled by a male/female coupling with each rotating element (32a;33a), said plate (31) having preferably a plurality of female-thread holes and each rotating element being inserted inside a respective one of said holes and having an external thread mating with the female thread of the hole.

12. Accumulation extruder head according to one of the preceding claims, wherein said rotating elements of the mechatronic assembly are each in the form of a respective screw with an external thread and/or wherein the rotating elements are irreversible.

13. Accumulation extruder head according to one of the preceding claims, wherein the electric actuators are linear electric actuators (32,33), each comprising a vertical-axis electric gearmotor with encoder.

14. Accumulation extruder head according to one of the preceding claims, further comprising resilient means (51,52) arranged and configured to react elastically to a variation in the distance between the output element (31) of the mechatronic assembly and the input element (41) of the pusher assembly.

15. Accumulation extruder head according to Claim 14, wherein the resilient means (51,52) are supported on said coupling means (31c) which mechanically couple the input element (41) to the output element (31).

16. Accumulation extruder head according to one of Claims 14 or 15, wherein, in an equilibrium position, said resilient means (51,52) are prestressed with a prestressing force, with the output element (31) and the input element (41) arranged at a predefined distance in the equilibrium position.

17. Accumulation extruder head according to one of the preceding Claims, wherein the coupling means include fastener screws (31c) passing through the output element (31) and fixed to the input element (41) of the pusher assembly (40).

18. Method for extrusion with accumulation of a load of thermoplastic resin in the form of a tubular parison, comprising:
- feeding an extruded thermoplastic resin to a head body (10) of an accumulation extruder head, the load being fed to an accumulation chamber (13a) with a central vertical axis (z) defined inside an internal cavity (13) of the head body, until the accumulation chamber is filled with a predefined load of thermoplastic resin;
- expelling the accumulated load of thermoplastic resin in the form of a tubular parison through a bottom outlet mouth (11) communicating with the accumulation chamber (13a);
wherein a piston (18) is coaxially inserted inside the accumulation chamber (13a) and moves in a reciprocating manner inside the accumulation chamber along the central vertical axis (z);
· in an upward direction during the filling step, from a lowered expulsion position into a raised position;
· in an expulsion direction during the expulsion step, from a raised position into the lowered expulsion position;
wherein the head comprises a mechatronic assembly (30) comprising an output element (31), linearly displaceable along the central vertical axis (z) between a raised position and a lowered position, and a plurality of electric actuators, each of which rotationally drives a respective rotating element which is coupled to the output element (31) by means of a coupling such that rotation of the rotating element displaceably drives the output element in the vertical direction,
wherein the electric actuators are controlled and configured to drive in a coordinated manner said rotating elements so as to jointly displace said output element (31);
wherein, during the expulsion step, the output element is driven in the expulsion direction from the raised position into the lowered position and cooperates with an input element (41) of a pusher assembly (40) which is rigidly coupled to the piston (18) for displacement therewith, so as to push the piston (18) in the expulsion direction towards the lowered position.
wherein, in the filling step for filling the accumulation chamber, the output element (31) of the mechatronic assembly (30) is detached from the input element (41) of the pusher assembly so as to allow movement of the piston in the upward direction;
**characterized in that** the input element (41) of the pusher assembly (40) is mechanically coupled with the output element (31) via coupling means (31c) configured to keep the input element (41) engaged with the output element (31), leaving a degree of play for relative movement in the vertical direction greater than or equal to a predefined minimum distance.

19. Method according to the preceding claim, wherein each of said rotating elements rotates about a vertical axis parallel and offset with respect to the central vertical axis.

20. Method according to Claim 18 or 19 wherein, in the filling step, a detection sensor measures a distance between the output element (31) of the mechatronic assembly and the input element (41) of the pusher assembly, and the output element (31) is displaced with a controlled upward movement depending on a detected distance signal emitted by the detection sensor (35).

21. Method according to the preceding Claim wherein, during movement of the piston in the upward direction in the filling step for filling the accumulation chamber, the output element (31) is displaced in the upward direction so as to maintain a predefined minimum distance between the output element and the input element (41) of the pusher assembly (40).

22. Method according to one of Claims 20 to 21, wherein, during the filling step, a control unit for controlling the mechatronic assembly adjusts the displacement of the output element (31) depending on the detected distance signal emitted by the detection sensor (35) so as to maintain a predefined minimum distance between the output element (31) and the input element (41) of the pusher assembly.

## Patentansprüche

1. Speicherextrusionskopf (1) für eine Blasformmaschine zum Blasformen von Behältern, umfassend:
einen Kopfkörper (10), aufweisend:
eine innere Speicherkammer (13a) mit einer zentralen vertikalen Achse (z), die dazu ausgelegt ist, mit einer Charge thermoplastischen Harzes gefüllt zu werden;
eine untere Austrittsmündung (11) zum Ausstoßen der Charge thermoplastischen Harzes in Form eines schlauchförmigen Vorformlings, wobei die Speicherkammer (13a) unten mit der Austrittsmündung (11) in Verbindung steht;
einen Kolben (18), der koaxial innerhalb der Speicherkammer (13a) eingesetzt ist, wobei der Kolben (18) innerhalb der Speicherkammer entlang der zentralen vertikalen Achse (z) hin- und her bewegbar ist:
- in einer Ausstoßrichtung, von einer angehobenen Position zu einer abgesenkten Ausstoßposition; und
- in einer Aufwärtsrichtung, von der Ausstoßposition zu einer angehobenen Position;
eine mechatronische Anordnung (30), umfassend:
ein Ausgabeelement (31), das entlang der zentralen vertikalen Achse (z) zwischen einer angehobenen Position und einer abgesenkten Position linear verschiebbar ist;
eine Mehrzahl von elektrischen Aktuatoren, die jeweils dazu eingerichtet sind, ein jeweiliges rotierendes Element drehend zu betreiben;
eine Schubanordnung (40), die zwischen dem Ausgabeelement (31) und dem Kolben (18) angeordnet ist und ein Eingabeelement (41) umfasst, das starr mit dem Kolben (18) zur Verschiebung damit gekoppelt und dazu eingerichtet ist, mit dem Ausgabeelement (31) der mechatronischen Anordnung (30) zusammenzuwirken, um den Kolben (18) in der Ausstoßrichtung in Richtung der abgesenkten Position zu schieben;
wobei jedes rotierende Element mit dem Ausgabeelement (31) so gekoppelt ist, dass eine Rotation des rotierenden Elements das Ausgabeelement in der vertikalen Richtung verschiebend antreibt; und
wobei die elektrischen Aktuatoren gesteuert und konfiguriert sind, um die genannten rotierenden Elemente in koordinierter Weise anzutreiben, um gemeinsam das genannte Ausgabeelement (31) zu verschieben,
**dadurch gekennzeichnet, dass** das Eingabeelement (41) der Schubanordnung (40) mit dem Ausgabeelement (31) über Kopplungsmittel (31c) mechanisch gekoppelt ist, die dazu konfiguriert sind, das Eingabeelement (41) mit dem Ausgabeelement (31) in Eingriff zu halten, wobei ein Spiel für eine relative Bewegung in der vertikalen Richtung belassen wird, das größer als oder gleich einem vordefinierten Mindestabstand ist.

2. Speicherextrusionskopf nach Anspruch 1, wobei das Ausgabeelement (31) der mechatronischen Anordnung (30) und das Eingabeelement (41) der Schubanordnung (40) betriebsmäßig so gekoppelt sind, dass sie in der vertikalen Richtung (Z-Z) im Ausstoßsinn integral verschoben werden, um den Kolben (18) innerhalb der Speicherkammer (13a) für thermoplastisches Harz während des Ausstoßens der Charge in Form eines Vorformlings zu schieben.

3. Speicherextrusionskopf nach einem der vorhergehenden Ansprüche, wobei die mechatronische Anordnung (30) und das Eingabeelement (41) der Schubanordnung (40) betriebsmäßig so gekoppelt sind, dass das Ausgabeelement (31) der mechatronischen Anordnung (30) während der Bewegung des Kolbens in der Aufwärtsrichtung in einem Füllschritt zum Füllen der Speicherkammer von dem Eingabeelement (41) der Schubanordnung gelöst gehalten wird.

4. Speicherextrusionskopf nach dem vorhergehenden Anspruch, wobei die mechatronische Anordnung derart konfiguriert ist, dass während der Bewegung des Kolbens in der Aufwärtsrichtung in dem Füllschritt zum Füllen der Speicherkammer das Ausgabeelement (31) in der Aufwärtsrichtung verschoben wird, um einen vordefinierten Mindestabstand zwischen dem Ausgabeelement und dem Eingabeelement (41) der Schubanordnung (40) aufrechtzuerhalten.

5. Speicherextrusionskopf nach einem der vorhergehenden Ansprüche, umfassend eine Steuereinheit zum Steuern der mechatronischen Anordnung, die dazu konfiguriert ist, den Betrieb der genannten elektrischen Aktuatoren in synchronisierter Weise zu steuern, um das genannte Ausgabeelement (31) zu verschieben.

6. Speicherextrusionskopf nach einem der vorhergehenden Ansprüche, der einen Erfassungssensor zum Erfassen eines Abstands zwischen dem Ausgabeelement (31) der mechatronischen Anordnung und dem Eingabeelement (41) der Schubanordnung umfasst; wobei der Kopf derart konfiguriert ist, dass die Verschiebung des Ausgabeelements (31) während der Aufwärtsbewegung in dem Füllschritt in Abhängigkeit von einem erfassten Abstandssignal gesteuert wird, das von dem Erfassungssensor (35) ausgegeben wird.

7. Speicherextrusionskopf nach Anspruch 5 und 6, wobei die Steuereinheit der mechatronischen Anordnung die Verschiebung des Ausgabeelements (31) während der Aufwärtsbewegung in dem Füllschritt in Abhängigkeit von einem erfassten Abstandssignal einstellt, das von dem Erfassungssensor (35) ausgegeben wird, um einen vordefinierten Mindestabstand zwischen dem Ausgabeelement (31) und dem Eingabeelement (41) der Schubanordnung aufrechtzuerhalten.

8. Speicherextrusionskopf nach einem der vorhergehenden Ansprüche, wobei jedes rotierende Element um eine vertikale Achse rotiert, die parallel und versetzt in Bezug auf die zentrale vertikale Achse (z) ist.

9. Speicherextrusionskopf nach einem der vorhergehenden Ansprüche, umfassend zwei elektrische Aktuatoren und jeweilige rotierende Elemente, die in diametral entgegengesetzten Positionen in Bezug auf die zentrale vertikale Achse (z) angeordnet sind, oder mehr als zwei elektrische Aktuatoren und jeweilige rotierende Elemente, die entlang eines Umfangs, der auf der zentralen vertikalen Achse (z) zentriert ist, winkelmäßig äquidistant angeordnet sind.

10. Speicherextrusionskopf nach einem der vorhergehenden Ansprüche, wobei ein männliches Element (20) koaxial in den Hohlraum (13) des Kopfkörpers (10) eingesetzt ist und koaxial in Bezug auf den Kopfkörper (10) bewegbar ist, um die Öffnung der unteren Austrittsmündung (11) zum Ausstoßen des Harzes zu variieren, um ein Dickenprofil des ausgestoßenen Vorformlings einzustellen, wobei das männliche Element (20) durch eine Betätigungseinheit (21) mit einem elektrischen Aktuator (22) und einer Übertragungskette (23) bewegt wird, die koaxial mit der zentralen vertikalen Achse (z) angeordnet sind.

11. Speicherextrusionskopf nach einem der vorhergehenden Ansprüche, wobei das Ausgabeelement der mechatronischen Anordnung durch eine Platte (31) gebildet ist, die durch eine männlich/weiblich-Kopplung mit jedem rotierenden Element (32a; 33a) gekoppelt ist, wobei die genannte Platte (31) vorzugsweise eine Mehrzahl von Innengewindebohrungen aufweist und jedes rotierende Element innerhalb einer jeweiligen der genannten Bohrungen eingesetzt ist und ein Außengewinde aufweist, das mit dem Innengewinde der Bohrung zusammenpasst.

12. Speicherextrusionskopf nach einem der vorhergehenden Ansprüche, wobei die genannten rotierenden Elemente der mechatronischen Anordnung jeweils in Form einer jeweiligen Schraube mit einem Außengewinde vorliegen und/oder wobei die rotierenden Elemente irreversibel sind.

13. Speicherextrusionskopf nach einem der vorhergehenden Ansprüche, wobei die elektrischen Aktuatoren lineare elektrische Aktuatoren (32, 33) sind, die jeweils einen elektrischen Getriebemotor mit vertikaler Achse und Encoder umfassen.

14. Speicherextrusionskopf nach einem der vorhergehenden Ansprüche, ferner umfassend elastische Mittel (51, 52), die angeordnet und konfiguriert sind, um auf eine Variation des Abstands zwischen dem Ausgabeelement (31) der mechatronischen Anordnung und dem Eingabeelement (41) der Schubanordnung elastisch zu reagieren.

15. Speicherextrusionskopf nach Anspruch 14, wobei die elastischen Mittel (51, 52) auf den genannten Kopplungsmitteln (31c) abgestützt sind, die das Eingabeelement (41) mechanisch mit dem Ausgabeelement (31) koppeln.

16. Speicherextrusionskopf nach einem der Ansprüche 14 oder 15, wobei in einer Gleichgewichtsposition die genannten elastischen Mittel (51, 52) mit einer Vorspannkraft vorgespannt sind, wobei das Ausgabeelement (31) und das Eingabeelement (41) in der Gleichgewichtsposition in einem vordefinierten Abstand angeordnet sind.

17. Speicherextrusionskopf nach einem der vorhergehenden Ansprüche, wobei die Kopplungsmittel Befestigungsschrauben (31c) umfassen, die durch das Ausgabeelement (31) hindurchgehen und an dem Eingabeelement (41) der Schubanordnung (40) befestigt sind.

18. Verfahren zur Extrusion mit Speicherung einer Charge thermoplastischen Harzes in Form eines schlauchförmigen Vorformlings, umfassend:
- Zuführen eines extrudierten thermoplastischen Harzes zu einem Kopfkörper (10) eines Speicherextrusionskopfs, wobei die Charge einer Speicherkammer (13a) mit einer zentralen vertikalen Achse (z) zugeführt wird, die innerhalb eines inneren Hohlraums (13) des Kopfkörpers definiert ist, bis die Speicherkammer mit einer vordefinierten Charge thermoplastischen Harzes gefüllt ist;
- Ausstoßen der gespeicherten Charge thermoplastischen Harzes in Form eines schlauchförmigen Vorformlings durch eine untere Austrittsmündung (11), die mit der Speicherkammer (13a) in Verbindung steht;
wobei ein Kolben (18) koaxial innerhalb der Speicherkammer (13a) eingesetzt ist und sich innerhalb der Speicherkammer entlang der zentralen vertikalen Achse (z) hin- und herbewegt;
in einer Aufwärtsrichtung während des Füllschritts, von einer abgesenkten Ausstoßposition in eine angehobene Position;
in einer Ausstoßrichtung während des Ausstoßschritts, von einer angehobenen Position in die abgesenkte Ausstoßposition;
wobei der Kopf eine mechatronische Anordnung (30) umfasst, die ein Ausgabeelement (31), das entlang der zentralen vertikalen Achse (z) zwischen einer angehobenen Position und einer abgesenkten Position linear verschiebbar ist, und eine Mehrzahl von elektrischen Aktuatoren umfasst, von denen jeder ein jeweiliges rotierendes Element drehend antreibt, das mit dem Ausgabeelement (31) mittels einer Kopplung derart gekoppelt ist, dass eine Rotation des rotierenden Elements das Ausgabeelement in der vertikalen Richtung verschiebend antreibt,
wobei die elektrischen Aktuatoren gesteuert und konfiguriert sind, um die genannten rotierenden Elemente in koordinierter Weise anzutreiben, um gemeinsam das genannte Ausgabeelement (31) zu verschieben;
wobei während des Ausstoßschritts das Ausgabeelement in der Ausstoßrichtung von der angehobenen Position in die abgesenkte Position angetrieben wird und mit einem Eingabeelement (41) einer Schubanordnung (40) zusammenwirkt, das starr mit dem Kolben (18) zur Verschiebung damit gekoppelt ist, um den Kolben (18) in der Ausstoßrichtung in Richtung der abgesenkten Position zu schieben;
wobei in dem Füllschritt zum Füllen der Speicherkammer das Ausgabeelement (31) der mechatronischen Anordnung (30) von dem Eingabeelement (41) der Schubanordnung gelöst ist, um eine Bewegung des Kolbens in der Aufwärtsrichtung zu ermöglichen;
**dadurch gekennzeichnet, dass** das Eingabeelement (41) der Schubanordnung (40) mit dem Ausgabeelement (31) über Kopplungsmittel (31c) mechanisch gekoppelt ist, die dazu konfiguriert sind, das Eingabeelement (41) mit dem Ausgabeelement (31) in Eingriff zu halten, wobei ein Spiel für eine relative Bewegung in der vertikalen Richtung belassen wird, das größer als oder gleich einem vordefinierten Mindestabstand ist.

19. Verfahren nach dem vorhergehenden Anspruch, wobei jedes der genannten rotierenden Elemente um eine vertikale Achse rotiert, die parallel und versetzt in Bezug auf die zentrale vertikale Achse ist.

20. Verfahren nach Anspruch 18 oder 19, wobei in dem Füllschritt ein Erfassungssensor einen Abstand zwischen dem Ausgabeelement (31) der mechatronischen Anordnung und dem Eingabeelement (41) der Schubanordnung misst, und das Ausgabeelement (31) mit einer gesteuerten Aufwärtsbewegung in Abhängigkeit von einem erfassten Abstandssignal verschoben wird, das von dem Erfassungssensor (35) ausgegeben wird.

21. Verfahren nach dem vorhergehenden Anspruch, wobei während der Bewegung des Kolbens in der Aufwärtsrichtung in dem Füllschritt zum Füllen der Speicherkammer das Ausgabeelement (31) in der Aufwärtsrichtung verschoben wird, um einen vordefinierten Mindestabstand zwischen dem Ausgabeelement und dem Eingabeelement (41) der Schubanordnung (40) aufrechtzuerhalten.

22. Verfahren nach einem der Ansprüche 20 bis 21, wobei während des Füllschritts eine Steuereinheit zum Steuern der mechatronischen Anordnung die Verschiebung des Ausgabeelements (31) in Abhängigkeit von dem erfassten Abstandssignal einstellt, das von dem Erfassungssensor (35) ausgegeben wird, um einen vordefinierten Mindestabstand zwischen dem Ausgabeelement (31) und dem Eingabeelement (41) der Schubanordnung aufrechtzuerhalten.

## Revendications

1. Tête d'extrudeuse à accumulation (1) pour une machine de moulage par soufflage pour des récipients moulés par soufflage, comprenant :
un corps de tête (10), ayant : une chambre d'accumulation interne (13a) avec un axe vertical central (z), conçue pour être remplie avec une charge de résine thermoplastique; une embouchure de sortie inférieure (11) pour l'expulsion de la charge de résine thermoplastique sous la forme d'une paraison tubulaire, la chambre d'accumulation (13a) communiquant au fond avec l'embouchure de sortie (11);
un piston (18), inséré de manière coaxiale à l'intérieur de la chambre d'accumulation (13a), le piston (18) étant mobile en va-et-vient à l'intérieur de la chambre d'accumulation le long de l'axe vertical central (z) :
- dans une direction d'expulsion, d'une position relevée à une position d'expulsion abaissée; et
- dans une direction vers le haut, de la position d'expulsion à une position relevée; un ensemble mécatronique (30) comprenant :
un élément de sortie (31), déplaçable de manière linéaire le long de l'axe vertical central (z) entre une position relevée et une position abaissée; une pluralité d'actionneurs électriques, chacun agencé pour faire fonctionner en rotation un élément rotatif respectif; un ensemble poussoir (40) agencé entre l'élément de sortie (31) et le piston (18) et comprenant un élément d'entrée (41) couplé de manière rigide au piston (18) pour se déplacer avec celui-ci et agencé pour coopérer avec l'élément de sortie (31) de l'ensemble mécatronique (30) de manière à pousser le piston (18) dans la direction d'expulsion vers la position abaissée; dans lequel chaque élément rotatif est couplé à l'élément de sortie (31) de sorte que la rotation de l'élément rotatif entraîne de manière déplaçable l'élément de sortie dans la direction verticale; et dans lequel les actionneurs électriques sont commandés et configurés pour entraîner de manière coordonnée lesdits éléments rotatifs de manière à déplacer conjointement ledit élément de sortie (31),
**caractérisée en ce que** l'élément d'entrée (41) de l'ensemble poussoir (40) est couplé mécaniquement à l'élément de sortie (31) par l'intermédiaire de moyens de couplage (31c) configurés pour maintenir l'élément d'entrée (41) en prise avec l'élément de sortie (31), laissant un degré de jeu pour un mouvement relatif dans la direction verticale supérieur ou égal à une distance minimale prédéfinie.

2. Tête d'extrudeuse à accumulation selon la revendication 1, dans laquelle l'élément de sortie (31) de l'ensemble mécatronique (30) et l'élément d'entrée (41) de l'ensemble poussoir (40) sont fonctionnellement couplés de manière à être déplacés d'un seul tenant dans la direction verticale (Z-Z) dans le sens d'expulsion pour pousser le piston (18) à l'intérieur de la chambre d'accumulation de résine thermoplastique (13a) pendant l'expulsion de la charge sous la forme d'une paraison.

3. Tête d'extrudeuse à accumulation selon l'une des revendications précédentes, dans laquelle l'ensemble mécatronique (30) et l'élément d'entrée (41) de l'ensemble poussoir (40) sont fonctionnellement couplés de manière à maintenir l'élément de sortie (31) de l'ensemble mécatronique (30) détaché de l'élément d'entrée **(41)** de l'ensemble poussoir pendant le mouvement du piston dans la direction vers le haut dans une étape de remplissage pour remplir la chambre d'accumulation.

4. Tête d'extrudeuse à accumulation selon la revendication précédente, dans laquelle l'ensemble mécatronique est configuré de telle sorte que, pendant le mouvement du piston dans la direction vers le haut dans l'étape de remplissage pour remplir la chambre d'accumulation, l'élément de sortie (31) est déplacé dans la direction vers le haut de manière à maintenir une distance minimale prédéfinie entre l'élément de sortie et l'élément d'entrée (41) de l'ensemble poussoir (40).

5. Tête d'extrudeuse à accumulation selon l'une des revendications précédentes, comprenant une unité de commande pour commander l'ensemble mécatronique configuré pour commander le fonctionnement desdits actionneurs électriques d'une manière synchronisée pour déplacer ledit élément de sortie (31).

6. Tête d'extrudeuse à accumulation selon l'une des revendications précédentes, comprenant un capteur de détection pour détecter une distance entre l'élément de sortie (31) de l'ensemble mécatronique et l'élément d'entrée (41) de l'ensemble poussoir; la tête étant configurée de telle sorte que le déplacement de l'élément de sortie (31) pendant le mouvement vers le haut dans l'étape de remplissage est commandé en fonction d'un signal de distance détecté émis par le capteur de détection (35).

7. Tête d'extrudeuse à accumulation selon la revendication 5 et 6, dans laquelle l'unité de commande de l'ensemble mécatronique ajuste le déplacement de l'élément de sortie (31) pendant le mouvement vers le haut dans l'étape de remplissage, en fonction d'un signal de distance détecté émis par le capteur de détection (35) de manière à maintenir une distance minimale prédéfinie entre l'élément de sortie (31) et l'élément d'entrée (41) de l'ensemble poussoir.

8. Tête d'extrudeuse à accumulation selon l'une des revendications précédentes, dans laquelle chaque élément rotatif tourne autour d'un axe vertical parallèle et décalé par rapport à l'axe vertical central (z).

9. Tête d'extrudeuse à accumulation selon l'une des revendications précédentes, comprenant deux actionneurs électriques et des éléments rotatifs respectifs agencés dans des positions diamétralement opposées par rapport à l'axe central vertical (z) ou plus de deux actionneurs électriques et des éléments rotatifs respectifs agencés angulairement équidistants le long d'une circonférence centrée sur l'axe central vertical (z).

10. Tête d'extrudeuse à accumulation selon l'une des revendications précédentes, dans laquelle un élément mâle (20) est inséré de manière coaxiale dans la cavité (13) du corps de tête (10) et est mobile de manière coaxiale par rapport au corps de tête (10) de manière à faire varier l'ouverture de l'embouchure de sortie inférieure (11) pour expulser la résine afin d'ajuster un profil d'épaisseur de la paraison expulsée, dans laquelle l'élément mâle (20) est déplacé par une unité d'actionnement (21) avec un actionneur électrique (22) et une chaîne de transmission (23), qui sont agencés de manière coaxiale avec l'axe vertical central (z).

11. Tête d'extrudeuse à accumulation selon l'une des revendications précédentes, dans laquelle l'élément de sortie de l'ensemble mécatronique est formé par une plaque (31) couplée par un accouplement mâle/femelle avec chaque élément rotatif (32a; 33a), ladite plaque (31) ayant de préférence une pluralité de trous de filetage femelle et chaque élément rotatif étant inséré à l'intérieur d'un trou respectif desdits trous et ayant un filetage externe s'accouplant avec le filetage femelle du trou.

12. Tête d'extrudeuse à accumulation selon l'une des revendications précédentes, dans laquelle lesdits éléments rotatifs de l'ensemble mécatronique sont chacun sous la forme d'une vis respective avec un filetage externe et/ou dans laquelle les éléments rotatifs sont irréversibles.

13. Tête d'extrudeuse à accumulation selon l'une des revendications précédentes, dans laquelle les actionneurs électriques sont des actionneurs électriques linéaires (32, 33), chacun comprenant un motoréducteur électrique à axe vertical avec codeur.

14. Tête d'extrudeuse à accumulation selon l'une des revendications précédentes, comprenant en outre des moyens résilients (51, 52) agencés et configurés pour réagir de manière élastique à une variation de la distance entre l'élément de sortie (31) de l'ensemble mécatronique et l'élément d'entrée (41) de l'ensemble poussoir.

15. Tête d'extrudeuse à accumulation selon la revendication 14, dans laquelle les moyens résilients (51, 52) sont supportés sur lesdits moyens de couplage (31c) qui couplent mécaniquement l'élément d'entrée (41) à l'élément de sortie (31).

16. Tête d'extrudeuse à accumulation selon l'une des revendications 14 ou 15, dans laquelle, dans une position d'équilibre, lesdits moyens résilients (51, 52) sont précontraints avec une force de précontrainte, avec l'élément de sortie (31) et l'élément d'entrée (41) agencés à une distance prédéfinie dans la position d'équilibre.

17. Tête d'extrudeuse à accumulation selon l'une des revendications précédentes, dans laquelle les moyens de couplage comprennent des vis de fixation (31c) passant à travers l'élément de sortie (31) et fixées à l'élément d'entrée (41) de l'ensemble poussoir (40).

18. Procédé d'extrusion avec accumulation d'une charge de résine thermoplastique sous la forme d'une paraison tubulaire, comprenant :
- introduire une résine thermoplastique extrudée dans un corps de tête (10) d'une tête d'extrudeuse à accumulation, la charge étant introduite dans une chambre d'accumulation (13a) avec un axe vertical central (z) défini à l'intérieur d'une cavité interne (13) du corps de tête, jusqu'à ce que la chambre d'accumulation soit remplie avec une charge prédéfinie de résine thermoplastique;
- expulser la charge accumulée de résine thermoplastique sous la forme d'une paraison tubulaire à travers une embouchure de sortie inférieure (11) communiquant avec la chambre d'accumulation (13a); dans lequel un piston (18) est inséré de manière coaxiale à l'intérieur de la chambre d'accumulation (13a) et se déplace en va-et-vient à l'intérieur de la chambre d'accumulation le long de l'axe vertical central (z);
· dans une direction vers le haut pendant l'étape de remplissage, d'une position d'expulsion abaissée à une position relevée;
· dans une direction d'expulsion pendant l'étape d'expulsion, d'une position relevée à la position d'expulsion abaissée; dans lequel la tête comprend un ensemble mécatronique (30) comprenant un élément de sortie (31), déplaçable de manière linéaire le long de l'axe vertical central (z) entre une position relevée et une position abaissée, et une pluralité d'actionneurs électriques, dont chacun entraîne en rotation un élément rotatif respectif qui est couplé à l'élément de sortie (31) au moyen d'un couplage de telle sorte que la rotation de l'élément rotatif entraîne de manière déplaçable l'élément de sortie dans la direction verticale, dans lequel les actionneurs électriques sont commandés et configurés pour entraîner de manière coordonnée lesdits éléments rotatifs de manière à déplacer conjointement ledit élément de sortie (31); dans lequel, pendant l'étape d'expulsion, l'élément de sortie est entraîné dans la direction d'expulsion de la position relevée à la position abaissée et coopère avec un élément d'entrée (41) d'un ensemble poussoir (40) qui est couplé de manière rigide au piston (18) pour se déplacer avec celui-ci, de manière à pousser le piston (18) dans la direction d'expulsion vers la position abaissée. dans lequel, dans l'étape de remplissage pour remplir la chambre d'accumulation, l'élément de sortie (31) de l'ensemble mécatronique (30) est détaché de l'élément d'entrée (41) de l'ensemble poussoir de manière à permettre le mouvement du piston dans la direction vers le haut; **caractérisé en ce que** l'élément d'entrée (41) de l'ensemble poussoir (40) est couplé mécaniquement à l'élément de sortie (31) par l'intermédiaire de moyens de couplage (31c) configurés pour maintenir l'élément d'entrée (41) en prise avec l'élément de sortie (31), laissant un degré de jeu pour un mouvement relatif dans la direction verticale supérieur ou égal à une distance minimale prédéfinie.

19. Procédé selon la revendication précédente, dans lequel chacun desdits éléments rotatifs tourne autour d'un axe vertical parallèle et décalé par rapport à l'axe vertical central.

20. Procédé selon la revendication 18 ou 19, dans lequel, dans l'étape de remplissage, un capteur de détection mesure une distance entre l'élément de sortie (31) de l'ensemble mécatronique et l'élément d'entrée (41) de l'ensemble poussoir, et l'élément de sortie (31) est déplacé avec un mouvement vers le haut commandé en fonction d'un signal de distance détecté émis par le capteur de détection (35).

21. Procédé selon la revendication précédente dans lequel, pendant le déplacement du piston dans la direction vers le haut dans l'étape de remplissage pour remplir la chambre d'accumulation, l'élément de sortie (31) est déplacé dans la direction vers le haut de manière à maintenir une distance minimale prédéfinie entre l'élément de sortie et l'élément d'entrée (41) de l'ensemble poussoir (40).

22. Procédé selon l'une des revendications 20 à 21, dans lequel, pendant l'étape de remplissage, une unité de commande pour commander l'ensemble mécatronique ajuste le déplacement de l'élément de sortie (31) en fonction du signal de distance détecté émis par le capteur de détection (35) de manière à maintenir une distance minimale prédéfinie entre l'élément de sortie (31) et l'élément d'entrée (41) de l'ensemble poussoir.
